# EUROPEAN PATENT SPECIFICATION

(11) **EP 1 487 673 B1**
(45) Date of publication and mention of the grant of the patent: **16.07.2014**
(21) Application number: 03745609.2
(22) Date of filing: 26.03.2003
(51) Int. Cl.: B60R 21/2165, B60R 21/216

(54) **DYNAMIC SLIDING TETHER ARRANGEMENT FOR AIRBAG DOOR**
DYNAMISCHE VERSCHIEBBARE HALTESEILANORDNUNG FÜR AIRBAGTÜR
AGENCEMENT D'ATTACHE A COULISSEMENT DYNAMIQUE POUR PORTE DE COUSSIN GONFLABLE

(30) Priority: 27.03.2002 US 367924 P
(43) Date of publication of application: 22.12.2004
(73) Proprietor: Hyundai Mobis Co., Ltd., Gangnam-gu, Seoul (KR)
(72) Inventor: GRAY, John D., Union, NH 03887 (US); BATCHELDER, Bruce A,, Dover, NH 03820 (US); EVANS, Raymond, S., Madbury, NH 03820 (US); ROGERS, Jimmy C,, Berwick, ME 03901 (US); POUR, Brian, Collins & Aikman Automotive Co. Inc., Troy, MI 48083 (US); PARKER, Doug, Collins & Aikman Automotive Co. Inc, Troy, MI 48083 (US); CARROLL, Phil, Collins & Aikman Automotive Co. Inc, Troy, MI 48084 (US)
(74) Representative: Von Kreisler Selting Werner - Partnerschaft von Patentanwälten und Rechtsanwälten mbB
(86) International application number: PCT/US2003/009181
(87) International publication number: WO 2003/082632

(56) References cited:
- EP-A- 0 695 671
- EP-A- 0 722 862
- DE-A1- 19 645 866
- DE-U1- 29 508 063
- FR-A- 2 649 945
- US-A- 5 308 106
- US-A- 5 941 558
- US-B1- 6 203 056
- US-B1- 6 203 056

## Description

### Field of Invention

The present invention relates to airbag door constructions for vehicles and, more particularly, to hinging and retention of the door upon airbag deployment through the use of sliding tether arrangements. In one embodiment the tether is combined with a hinge and reaction plate of metal that is insert-molded into a plastic airbag door and deployment chute construction. The metal and plastic door/chute are allowed to slide relative to one another by a series of slots and molded plastic buttons or stops.

In another embodiment, the ends of the tether are attached to rods, one of which is trapped between the instrument panel and chute, the other end is placed between the airbag door and a vibration welded back panel. The door/back panel has ribs which allow the door to slide relative to the tether and rod end.

### Background of the Invention

Nearly all motor vehicles today are provided with inflatable restraint systems to protect both the driver and passengers in the event of a collision. The airbag system for the passenger side of the vehicle generally includes an inflator and reaction canister located behind the instrument panel and the airbag inflates through an opening in the panel. That opening may be covered by a rectangular shaped door that is flush mounted in the opening and is moved out of the way on a hinge or tethers by the deploying airbag. In some applications, the door that covers the opening may be "invisible" to the occupants of the vehicle, that is, hidden behind a surface covering of skin and foam which is pre-weakened by a groove formed on the backside of the skin layer to allow a predictable tearing of the skin. A separate door substrate is hinged or tethered to the instrument panel or canister to control door opening.

Vehicles such as small trucks, SUV's and small to medium sized cars often will use a hard panel construction, without a separate soft skin and padded foam layer, to reduce cost. In these cases, a separate airbag door, instrument panel and door chute are assembled over the canister. To control the path of the airbag as it expands, a deployment chute transitions the space between the canister where the bag is stored and the back of the airbag door to assure that the bag does not expand in an undesirable direction. Use of a hard door separate from the remainder of the instrument panel may allow replacement of only the door portion after a low speed deployment, as the remainder of the instrument panel may not be damaged. In still other applications, the hard instrument panel may be of unitary construction with a pre-weakened seam of reduced cross-section formed on the underside of the panel, outlining the periphery of the airbag door. Hinges, tethers, reinforcements and chutes are then post-attached to the molded hard panel.

Additionally, it is known in the art to use both hinges and tethers to control the opening and travel of the door or door substrate. In US Patents 5,685,930; 5,564,731; 5,804,121; 5,902,428 and 5,975,563 to Gallagher, et al and commonly assigned to the assignee of the present invention and included herein by reference, a molded motor vehicle instrument panel made of thermoplastic material having an integral airbag deployment door for a passenger side airbag that is defined by a tear seam and normally retained by an integral flexible mounting/hinge flange is disclosed.

In USP's 5,685,930 and 5,902,428 the door is retained by a supplemental tethering hinge which is formed separately from the panel and attached by welding or an adhesive. The supplemental tethering hinge contains a loop or fold **63** as slack to let the door separate and move controllably away from the instrument panel to allow the bag to expand through the opening.

In USP's 5,564,731 and 5,975,563 the flexible tethering hinge is described as being of sheet material, thermosetting, thermoplastic, metal mesh or woven fabric of plastic or natural fibers and attached by mechanical fasteners or hot staked bosses on the inner side of the door portion.

USP's 5,975,563 and 5,804,121 are directed at an integral mounting hinge/flange on which is formed a bonded layer of second plastic material on one side of the flange and on the inner side of a potentially frangible portion of the door. The second plastic material has the physical characteristic of remaining ductile at low temperatures at which the instrument panel plastic material becomes brittle and as a result, the bonded layer forms a tether to retain the door in a controllable manner as it separates from the instrument panel when the airbag is deployed.

In USP 5,765,862 to Autoliv ASP, Inc., an inflatable airbag assembly mounted in a rectangular opening in the vehicle instrument panel is disclosed having bracket means, a plurality of thermoplastic resin fasteners and an integrally formed tether support bar **18** for a tether **20** that is connected between the door **14** and a bracket **22,** on the airbag module **16.**

USP 5,533,746 to Morton International recites "a cover for covering an opening in a panel adjacent to an airbag inflation system comprising:....a tether attachment element having a first portion sandwiched between said inner (metal) and outer substrates and second portion exposed for attachment to a tether and at least one tether having a loop at an outer end portion of said tether attachment element and having an inner end portion adapted for fixed attachment to limit the amount of movement of said cover away from the opening deployment of the airbag inflation system". Col. 9, Ln. 17-25. The tether may comprise a loop and the attachment element may be an elongated metal rod. The attachment element (rod) has a series of U-shapes that extend from between the door inner and outer back to a flexible tether that is looped in its undeployed condition.

USP 5,332,257, also to Morton International, discloses a tether having first and second ends, the first end being secured to said module cover (on the B-side), and the second end forming a loop, a retainer rod extending through said loop and a channel enclosing said retainer rod and loop in a fixed position.....to anchor said tether.

USP 5,211,421 to G.M. discloses a tether that is on the A-side of an airbag door, between substrate and foam layer which is fastened to a bracket on the canister.

An airbag door construction according to the preamble of claim 1 is known from DE 196 45 866 A1. Further constructions of airbag doors are disclosed in DE 295 08 063 U1, US 6,203,056 B1 and EP 0 722 862 A1.

All of these references use numerous components in an attempt to accomplish their objectives resulting in added material and manufacturing costs. Separate door, chute, tether, fastener and reinforcement materials are combined with a myriad of attachment processes to form an assembly that must be installed in the instrument panel.

It is therefore a general object of this invention to develop a molded structure that serves as an airbag door, deployment chute and tether/hinge/reaction plate arrangement with dynamic performance capability which can be installed as a single component in the instrument panel.

It is therefore a more specific object of the invention to provide a unitary molded structure for an airbag door and deployment chute.

It is also further object of the invention to provide an insert-molded tether/hinge/reaction plate that controls the movement of the door upon airbag deployment

Another object is to provide a new and improved tether arrangement for an airbag door where the door can slide relative to a tether until it encounters a hard stop.

A further object of the invention is to provide retention of the airbag door to a metal reaction plate and allow the sliding of the metal to take place on the chute side of a reaction plate hinge within the thermoplastic molded chute.

### Summary of the Invention

An airbag door construction for a motor vehicle comprising an instrument panel having an opening for an airbag, an airbag door formed in said opening including a tear seam which defines at least a portion of the periphery of said opening, a reaction plate and deployment chute attached to the underside of said airbag door and said instrument panel. The reaction plate and deployment chute include a tether having a first end and a second end to form a tethered reaction plate, wherein the first end of said tether is attached to a first rod wherein said first rod is located between said reaction plate and said airbag door, wherein said first rod is slidably engaged with the reaction plate; and said second end of said tether is attached to one of said instrument panel and deployment chute, whereupon airbag deployment said airbag door and said reaction plate can at least partially detach from said instrument panel and said tethered reaction plate can slide relative to said chute.

An airbag door construction for a motor vehicle comprising an instrument panel having an opening for an airbag, an airbag door and deployment chute installed in said opening, a tether, said tether attached to said airbag door, said tether slidably engaged to said chute whereupon airbag deployment said airbag door can at least partially detach from said instrument panel and said tether can slide relative to said chute.

An airbag door construction for a motor vehicle comprising an instrument panel having an opening for an airbag, an airbag door and deployment chute installed in said opening, a tether, said tether at least partially embedded in one of said airbag door and said deployment chute, said tether slidably engaged to said door, whereupon airbag deployment, said airbag door can at least partially detach from said instrument panel and said tether can slide relative to said airbag door.

An airbag door construction for a motor vehicle comprising an instrument panel having an opening for an airbag, an airbag door and deployment chute installed in said opening, a tether, said tether at least partially embedded, in one of said door and said deployment chute, said tether slidably engaged to said chute, whereupon airbag deployment said airbag door can at least partially detach from said instrument panel and said tether can slide relative to said chute.

An airbag door construction for a motor vehicle comprising an instrument panel having an opening for an airbag, an airbag door formed in said opening including a tear seam which defines at least a portion of the periphery of said opening, a reaction plate and deployment chute attached to the underside of said airbag door and said instrument panel. The reaction plate and deployment chute include a tether having a first end and a second end to form a tethered reaction plate, wherein the first end of said tether is attached to one or both of said airbag door and said reaction plate, and said second end of said tether is attached to a rod wherein said rod is engageable with said deployment chute whereupon airbag deployment said airbag door and said reaction plate can at least partially detach from said instrument panel and said tethered reaction plate can slide relative to said chute.

### Brief Description of the Drawings

FIG. 1 is a perspective view of a motor vehicle instrument panel including airbag deployment door with a tether/hinge according to the present invention as installed in a motor vehicle over an airbag system.
FIG. 2 is an enlarged view take along line **2-2 in** FIG. 1 when looking in the direction of the arrows and includes a diagrammatic view of the airbag system.
FIG. 3 is a view taken along line **2-2** of FIG. 1 when looking in the direction of the arrows of an alternate construction of the tether/hinge.
FIG. 4 is a perspective view of the tether/hinge/reaction plate shown in section in FIG. 3.
FIG. 4A is a perspective view of the tether/hinge/reaction plate as insert-molded into the airbag door/deployment chute.
FIG. 5 is a view in the direction of arrow **A** in FIG. 3 showing the slot and button.
FIG. 6 is an enlarged sectional view of an alternate hard panel construction as in FIG. 1, taken along line **2-2** looking in the direction of the arrows.
FIG. 7 is a plan view of the molded deployment chute/reaction plate shown in FIG. 6.
FIG. 8 is an enlarged view of the reaction plate/tether combination of FIG. 6.

### Detailed Description of The Preferred Embodiments

For elements common to the various embodiments of the invention, the numerical reference character between the embodiment is held constant, but distinguished by the addition of an alphanumeric character to the existing numerical reference character. In other words, for example, an element referenced at **10** in the first embodiment is correspondingly referenced at **10A, 10B,** and so forth in subsequent embodiments. Thus, where an embodiment description uses a reference character to refer to an element, the reference character applies equally, as distinguished by alphanumeric character, to the other embodiment where the element is common.

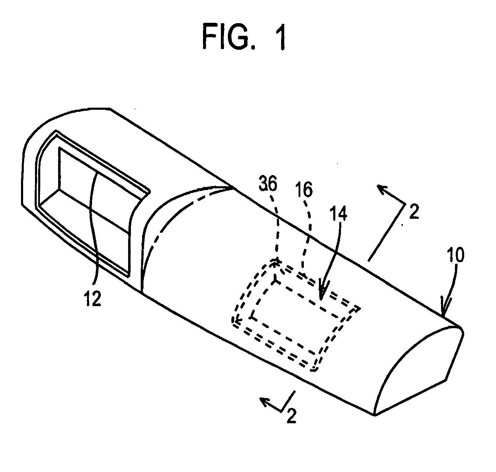

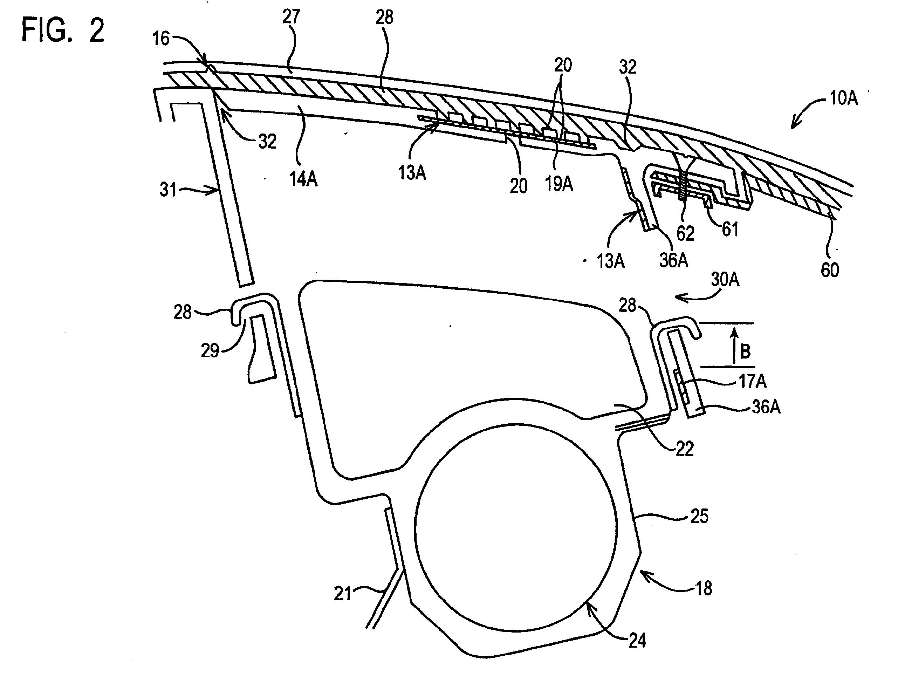

Referring to FIGS. 1 and 2 there is illustrated a molded motor vehicle instrument panel **10** as installed in a motor vehicle structure. The instrument panel **10** has an opening **12** on the driver side for the installation of an instrument cluster (not shown) and an airbag deployment door **14** of desired shape, in this case rectangular, on the passenger side whose entire or partial perimeter, in this case entire, is defined by a frangible tear seam **16** molded in the instrument panel. The tear seam **16** may be formed by a groove either in the face of the panel as shown or by a similar groove in the back side of the panel to hide the tear seam from view as is well known in the art or by other methods known in the art of forming an integral but frangible tear seam. When installed on the vehicle structure, the instrument panel covers an airbag system **18** that is located behind the instrument panel directly behind the airbag door **14** and is mounted on a sheet metal portion **21** of the vehicle structure. The airbag system **18** is of a conventional type that includes an inflatable airbag **22,** an inflator **24,** canister **25** and an impact sensor (not shown) that on vehicle impact triggers ignition of the inflator to inflate the airbag for deployment into the passenger space directly in front of a passenger seated on this side.

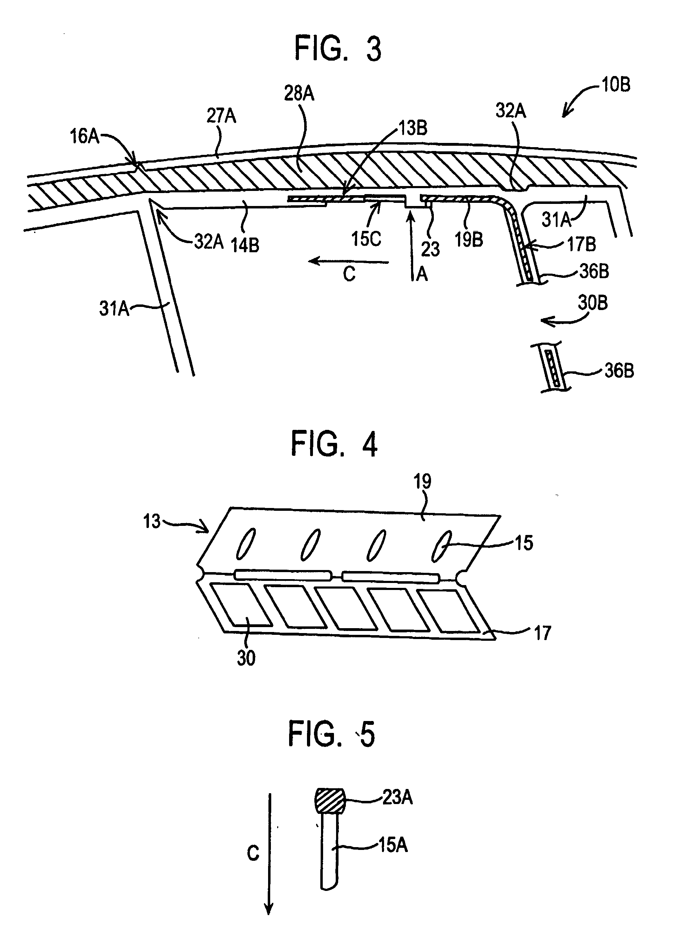

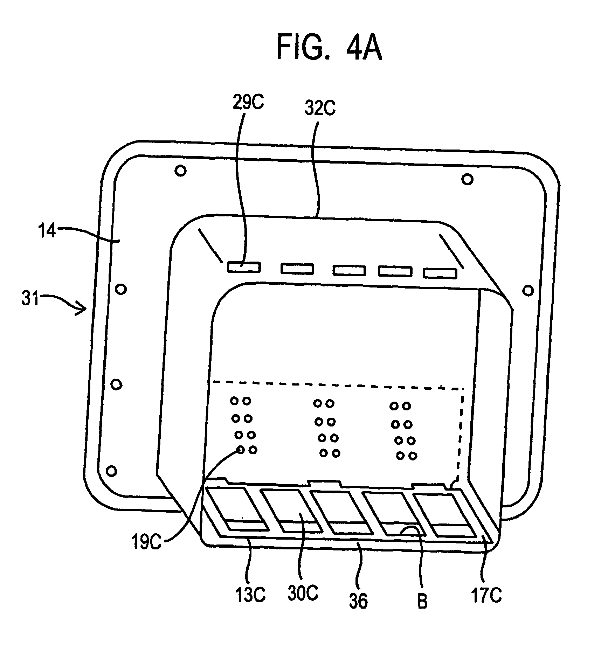

FIG. 2 shows a cross-sectional view of a soft instrument panel with an invisible airbag door taken along line **2-2** of FIG. 1 looking in the direction of the arrows. In this embodiment of the invention, a steel tether/hinge/reaction plate **13,** as shown in perspective view in FIG. 4, has been insert-molded into a thermoplastic integral door substrate/deployment chute combination **31** as shown in perspective view in FIG. 4A. The door substrate portion is indicated at **14A** in FIG. 2 and the downstanding deployment chute portion at **36A.** By molding these two components into a unitary construction, handling and assembly operations are greatly reduced. The airbag door substrate/deployment chute molding **31** is preferably injection molded of polycarbonate/acrylonitrile-butadiene-styrene polymer but may also be molded of thermoplastic olefin, thermoplastic elastomer or blends thereof or any plastic material suitable for this application, including thermoset plastic polymers.

The metal tether/hinge/reaction plate **13** shown in FIG. 4 is placed in an injection mold and positioned such that the downstanding hinge extension **17** is over-molded so that it resides on the inside of the deployment chute wall **36A** (see FIG. 2) and so that the reaction plate portion **19A** is substantially encapsulated in the door substrate by the local use of standoffs in waffle iron fashion on the mold lid, which result in the square wave or dental pattern shown at **20** in the door substrate top surface in FIG. 2.

FIG 4A shows the metal tether/hinge reaction plate **13C** molded into the airbag door/deployment chute **36** such that the reaction plate **19C** is partially encapsulated by thermoplastic. The hinge flange portion **17C** of the tether/hinge/reaction plate **13C** is molded on the inside of the hinge flange **36.**

The airbag door substrate/deployment chute **36A** in FIG. 2 is assembled to the instrument panel main substrate **60** before foaming by attaching a metal reinforcement **61** using threaded connectors **62** which pass through the door substrate **14A,** instrument panel main substrate **60** and reinforcement **61** to bind them together as shown in FIG. 2.

After skin **27** and foam **28** are applied to the surface of the instrument panel retainer **60** and airbag door substrate **14A,** the airbag canister **25** containing inflator **24** and airbag **22** is assembled to the deployment chute **36A** with hooks **28** or similar attachment mechanism that engage with openings in the deployment chute **29** which include opening **30** in the hinge flange portion **17** of the tether/hinge/reaction plate **13** shown in FIG. 4 and 4A.

As shown in FIG. 2, the airbag door substrate/deployment chute **31** contains pre-weakened areas at **32** which are of reduced thickness in a pattern to allow the airbag door to hinge open, in some cases a **"U"** shape and in other cases and **"X"** or "**H**" shape. Located approximately above the pre-weakened area **32** in the door substrate is a reduced thickness or pre-weakened section in the skin **27** at **16.** In other cases, the foam may be sliced in proximity to these pre-weakened areas to further provide predictability of tear seam tearing and reduced fragmentation from deployment of the airbag. Pre-weakening of the substrate, skin or foam may be accomplished by a variety of methods known to those skilled in the art and on either surface of the skin, foam or substrate.

As further shown in FIG. 2, the lower edge of opening **30A** in the hinge flange portion **17A** of the tether/hinge/reaction plate **13A** is located below the intersection point of the hook **28** that connects the canister and the deployment chute plastic wall **36A** by an amount **B.** This allows for the tether/hinge/reaction plate **17A** to slide upward (see FIG. 2 at **B)** in the direction of the arrow upon airbag deployment, until the flange portion **17A** of the tether/hinge/reaction plate **13** encounters the hook **28.** This provides for movement of the airbag door **14A** when it fractures from the instrument panel **10A** to clear the expanding airbag, yet allows for retention of the door **14A** through the tether/hinge/reaction plate **13A** which can slide upward 1-2 inches until the lower edge of opening **30A** in the hinge flange portion **17A** encounters hook **28.**

In addition, it should also be noted that the frictional engagement of hinge flange portion **17A** to the surface of the deployment chute **36A** can be adjusted to increase the resistance of the hinge flange portion in its speed and travel upwardly distance **B** upon air bag deployment. In this manner, one can, for example, provide an adhesive between hinge flange portion **17A** and deployment chute **36A.** Such adhesive must nevertheless allow the hinge flange portion **17A** to travel, but can serve to manage the shock that is ultimately experienced by the deployment door and tether upon air bag contact. This is all accomplished without affecting the amount of time it takes for the bag to deploy, but serves to improve the efficiency the tethering operation, such as reducing the chance that the tether might rupture.

Turning now to FIG. 3, an alternate embodiment of the tether/hinge/reaction plate **13B** and the airbag door substrate/deployment chute **31A** is disclosed. The airbag door substrate/deployment chute unitary molded construction **31A** is shown in section as indicated in FIG. 1 at line **2-2** looking in the direction of the arrows. The airbag door substrate/deployment chute **31A** is shown attached to an instrument panel **10B** and covered with a skin **27A** and foam **27A** layer. Pre-weakened sections in the substrate **32A** and skin **16** are also noted. What distinguishes this embodiment from the earlier described embodiment is that the sliding movement of the tether **13B** to the airbag door substrate/deployment chute **31A** takes place within the door substrate **14B.** As described in the earlier embodiment, the metal tether/hinge/reaction plate **13** shown in FIG. 4 is insert-molded preferably using polycarbonate/acrylonitrile-butandiene-styrene polymer.

In this embodiment, the hinge flange portion **17B** is essentially encapsulated in the plastic chute portion **36B** and the reaction plate portion **19B** is over-molded so that the plate resides substantially on the undersurface of the door substrate **14B** and contains elongated slots **15C** which are kept clear of the plastic that forms the door substrate **14B** except for some integrally molded plastic projections or buttons **23** that are formed during the insert molding process and extend through a portion of the slot **15C** and have a head that overlaps a portion of the reaction plate **19B** to hold it firmly to the door substrate **14B.** FIG. 4 shows the slots as formed in the metal tether/hinge/reaction plate. FIG. 5 shows an enlarged section of the slot **15C** and overmolded button **23A** as viewed in FIG. 3 in the direction of arrow **A.** Upon airbag deployment, the door substrate **14B** can break loose from the airbag door/deployment chute **31A** at **32A** and slide such that the button **23, 23A** moves in the slot **15, 15A** in the direction of arrow C as shown in FIGS. 3 and 5.

This provides for a molded airbag door/deployment chute of unitary construction with a dynamic tether and hinge that predictably control the opening and retention of the airbag door along with the integration of a reaction plate into the door substrate to direct the forces of airbag deployment.

While the embodiments described herein are for instrument panels having skin and foam covering layers, the invention also applies to hard molded instrument panels as well.

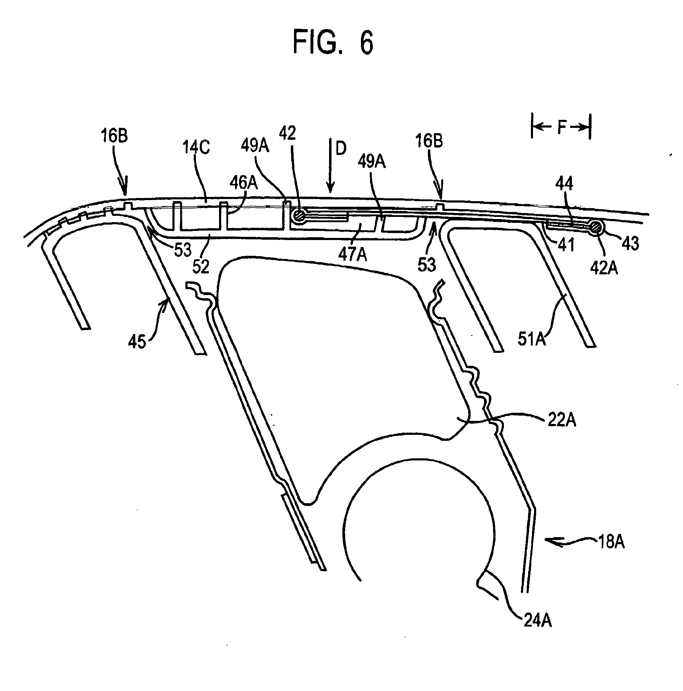

A third embodiment of a sliding tether design is shown in FIG. 6. This embodiment comprises a hard injection molded instrument panel **10C** with pre-weakened areas of reduced cross sectional thickness at **16B** defining the tear seam for an airbag door **14C.** The pre-weakened areas of reduced cross-sectional thickness may be molded in or cut by laser or ultrasonic knife or other methods known to those skilled in the art. The reduced cross-sectional thickness is generally in the form of a notch **(16B)** or **V**-groove which can be on either the upper surface or lower surface of the molded instrument panel **10C.** In alternate constructions, to form a softer feeling panel, the molded panel **10C** may be covered with skin and foam as shown in FIG. 2 and 3.

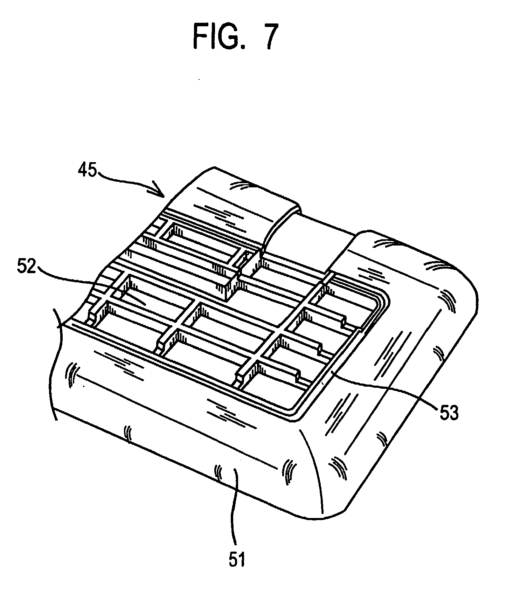

In FIG. 6, the tether/hinge construction **41** preferably consists of two rods or tubes **42, 42A** preferably of metal, around which is wrapped a woven fiber tape or sheet **43,** which extends between the rods **42, 42A.** The woven fiber tape **43** is preferably in two strips 1-2" in width as shown in FIG. 7 and may be of metal or plastic or natural fibers such as glass or carbon. The ends **44** of the woven tape or sheet are attached back onto itself after being wrapped around the rod or tube **42, 42A** by gluing, mechanical fastening or a variety of other methods known to those skilled in the art.

A deployment chute/reaction plate **45** is injection molded out of a similar thermoplastic material to the instrument panel **10C** as shown in FIG.7. This construction consists of a concave-shaped chute portion **51** that surrounds a reaction plate **52** and is separated by a tear seam area **53** which generally corresponds to the pre-weakened area **16B** in the instrument panel **10C.** This injection molded chute/plate **45** is attached to the underside of the molded instrument panel **10C** overlying the airbag door substrate **14C** by vibration welding or similar methods known to those skilled in the art. The tether **41** is placed between the back of the instrument panel **10C** and the chute **51A** before welding with one of the rods **42A** forward of the chute portion **51A** and the rod **42** on the opposite end of the tether **41** trapped between the reaction plate **52** and the airbag door portion **14C.**

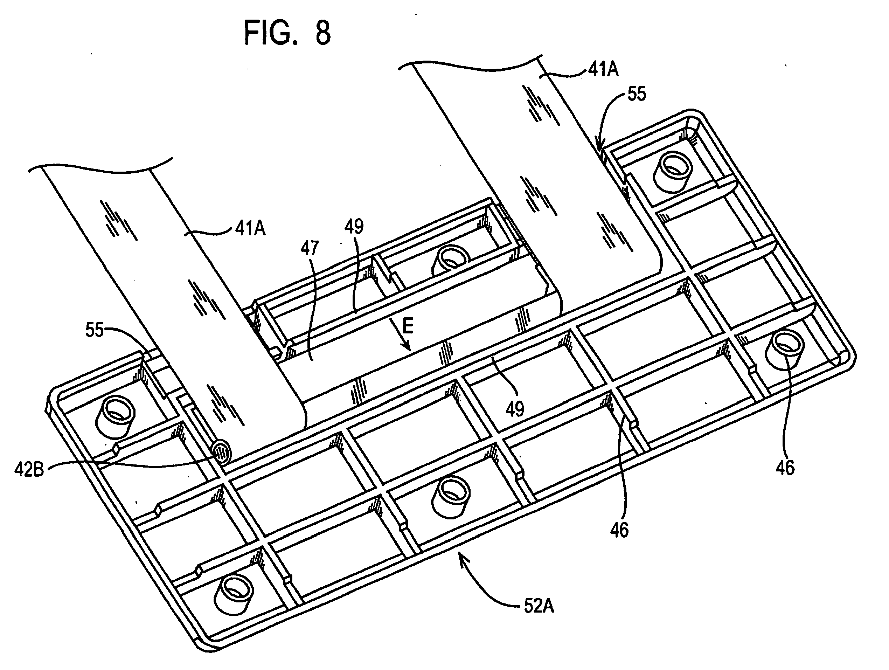

FIG. 8 is a view of the reaction plate portion **52A** of the molded deployment chute/reaction plate **45** looking in the direction of arrow **D** in FIG. 6. The reaction plate has a series of ribs and features **46** which are used to provide stiffness to the door area **14C** of the instrument panel **10C** and for attachment to the underside of the door **14C** by vibration welding. The tethers **41A** are shown wrapped around the rod **42B** which is placed in a slot **47** between supporting ribs **49.** There are also slots **55** in the reaction plate to allow the door to move relative to the tether.

The tethers extend through openings between the reaction plate **52A** and the door portion **14C** of the instrument panel **10C** with the rod **42A** at the opposite end located outside of the deployment chute **51A** that is vibration welded to the instrument panel underside. Thus, the tethered rod **42B** is trapped in the slot **47** between the welded door **14C** and reaction plate **52.** When the airbag **22A** deploys, the welded airbag door **14C**/reaction plate **52** can break loose from the instrument panel **10C** and slide a distance **E** in FIG. 8 along the tether, thus allowing the door to move with the expanding bag and hinging out of the way, yet remaining tethered to the instrument panel **10C.** It can also be appreciated that upon airbag deployment rod **42A** may slide rearward in car distance **F** until rod **42A** engaged the chute **51A.**

This construction, as with the metal tethers described in the other embodiments of this invention, provide improved reliability of airbag door hinging and retention as there is no loose loop in the tether that can get caught or folded over. In addition, the molded deployment chute/reaction plate construction disclosed herein, provides for simplified manufacturing and assembly operations, further improving airbag door reliability.

In addition, it should be noted herein that with respect to all the various embodiments herein it should be appreciated that the various options and preferred configurations may all be exchanged between each embodiment, as the case may be, to maximize the performance of the dynamic sliding tether arrangement disclosed herein.

This description and drawings illustratively set forth the presently preferred invention embodiments. The description and drawings are intended to describe these embodiments and not to limit the scope of the invention. Those skilled in the art will appreciate that still other modifications and variations of the present invention are possible in light of the above teaching while remaining within the scope of the following claims. Therefore, within the scope of the claims, one may practice the invention otherwise than as the description and drawings specifically shown and described.

## Claims

1. An airbag door construction for a motor vehicle comprising:
an instrument panel (10,10A,10B) having an opening for an airbag (22,22A),
an airbag door (14,14A,14B,14C) formed in said opening with preweakened areas (16A, 16B, 32) in the instrument panel (10,10A,10B),
a deployment chute (36,36A,36B) installed in said opening,
a reaction plate (52,52A), whereby the reaction plate (52,52A) and the deployment chute (36,36A,36B) are attached to the underside of said airbag door (14,14A,14B,14C) and said instrument panel (10,10A,10B),
a tether (41,41A) having a first end and a second end, wherein the first end of said tether is attached to said reaction plate (52,52A), and said second end of said tether is attached to said deployment chute (36,36A,36B),
whereupon airbag (22,22A) deployment said airbag door (14,14A,14B,14C) and said reaction plate (52,52A) can at least partially detach from said instrument panel (10,10A,10B) and said reaction plate (52,52A) can slide relative to said deployment chute (36,36A,36B),
wherein said tether (41,41A) is at least partially embedded in one of said airbag door and said deployment chute(36,36A,36B), said tether (41,41A) is slidably engaged to said airbag door (14,14A,14B,14C), whereupon airbag deployment said tether (41,41A) can slide relative to said airbag door (14,14A,14B,14C),
**characterized in that**
the first end of said tether (41,41A) is attached to a first rod (42), wherein
said first rod (42) is located between said reaction plate (52,52A) and said airbag door (14,14A,14B,14C), wherein said first rod (42) is slidably engaged with the reaction plate (52,52A).

2. The airbag door construction of claim 1, wherein said instrument panel (10,10A,10B) is a hard panel of injection molded thermoplastic.

3. The airbag door construction of claim 2, where said thermoplastic is comprised of polycarbonate, acrylonitrile-butadiene-styrene, thermoplastic olefin, thermoplastic elastomer and blends thereof.

4. The airbag door construction of claim 1, wherein said instrument panel (10,10A,10B) is covered with a flexible skin and foam.

5. The airbag door construction of claim 1 wherein said airbag door (14,14A,14B,14C) and deployment chute (36,36A,36B) is molded of thermoplastic.

6. The airbag door construction of claim 5, where said thermoplastic is comprised of polycarbonate, acrylonitrile-butadiene-styrene, thermoplastic olefin, thermoplastic elastomer and blends thereof.

7. The airbag door construction of claim 1, wherein said tether (41,41A) and/or reaction plate (52,52A) is comprised of metal.

8. The airbag door construction of claim 1, wherein said tether (41,41A) and/or reaction plate (52,52A) is comprised of plastic.

9. The airbag door construction of claim 1, wherein said tether (41,41A) is slidably engaged to said deployment chute (36,36A,36B), whereupon airbag deployment said tether (41,41A) can slide relative to said deployment chute (36,36A,36B).

10. The airbag door construction of claim 1, wherein said first rod (42) may be solid or hollow.

11. The airbag door construction of claim 1, wherein said tether (41,41A) is comprised of a woven mesh of fibers.

12. The airbag door construction of claim 11, wherein said woven mesh is comprised of metal or plastic or natural fibers.

13. The airbag door construction of claim 1, wherein said tether (41,41A) is comprised of cable or wire.

14. The airbag door construction of claim 1, wherein said tether (41,41A) is comprised of unidirectional fibers.

15. The airbag door construction of claim 1, wherein said tether (41,41A) is comprised of a formed wire or cable.

16. The airbag door of claim 1, wherein one or both of said reaction plate (52,52A) and deployment chute (36,36A,36B) is attached to said instrument panel (10,10A,10B) by vibration welding.

17. An airbag door construction of claim 1, wherein said second end of said tether (41,41A) is attached to a second rod (42A) wherein said second rod (42A) is engageable with said deployment chute (36,36A,36B).

## Patentansprüche

1. Airbagtürkonstruktion für ein Kraftfahrzeug, mit:
einem Armaturenbrett (10, 10A, 10B) mit einer Öffnung für einen Airbag (22, 22A),
einer Airbagtür (14, 14A, 14B, 14C), die in der Öffnung mit vorgeschwächten Bereichen (16A, 16B, 32) in dem Armaturenbrett (10, 10A, 10B) ausgebildet ist,
einem in der Öffnung eingebauten Entfaltungsschacht (36, 36A, 36B),
einer Reaktionsplatte (52, 52A), wobei die Reaktionsplatte (52, 52A) und der Entfaltungsschacht (36, 36A, 36B) an der Unterseite der Airbagtür (14, 14A, 14B, 14C) und des Armaturenbretts (10, 10A, 10B) angebracht sind,
einem Haltegurt (41, 41A) mit einem ersten und einem zweiten Ende, wobei das erste Ende des Haltegurts an der Reaktionsplatte (52, 52A) und das zweite Ende des Haltegurts an dem Entfaltungsschacht (36, 36A, 36B) angebracht ist,
wodurch sich beim Entfalten des Airbags (22, 22A) die Airbagtür (14, 14A, 14B, 14C) und die Reaktionsplatte (52, 52A) sich zumindest teilweise von dem Armaturenbrett (10, 10A, 10B) lösen können, und die Reaktionsplatte (52, 52A) in Bezug auf den Entfaltungsschacht (36, 36A, 36B) gleiten kann,
wobei der Haltegurt (41, 41A) zumindest teilweise in entweder die Airbagtür oder den Entfaltungsschacht (36, 36A, 36B) eingebettet ist, wobei der Haltegurt (41, 41A) gleitend verschiebbar mit der Airbagtür (14, 14A, 14B, 14C) verbunden ist, wodurch der Haltegurt (41, 41A) beim Entfalten des Airbags relativ zur Airbagtür (14, 14A, 14B, 14C) gleiten kann,
**dadurch gekennzeichnet, dass**
das erste Ende des Haltegurts (41, 41A) an einer ersten Stange (42) angebracht ist, wobei die erste Stange (42) zwischen der Reaktionsplatte (52, 52A) und der Airbagtür (14, 14A, 14B, 14C) angeordnet ist, wobei die erste Stange (42) gleitend verschiebbar mit der Reaktionsplatte (52, 52A) verbunden ist.

2. Airbagtürkonstruktion nach Anspruch 1, bei welcher das Armaturenbrett (10, 10A, 10B) eine harte Platte aus spritzgegossenem Thermoplast ist.

3. Airbagtürkonstruktion nach Anspruch 2, bei welcher der Thermoplast aus Polycarbonat, Acrylnitrilbutadienstyrol, thermoplastischem Olefin, thermoplastischem Elastomer und Mischungen aus diesen besteht.

4. Airbagtürkonstruktion nach Anspruch 1, bei welcher das Armaturenbrett (10, 10A, 10B) mit einer flexiblen Haut und Schaum bedeckt ist.

5. Airbagtürkonstruktion nach Anspruch 1, bei welcher die Airbagtür (14, 14A, 14B, 14C) und der Entfaltungsschacht (36, 36A, 36B) aus Thermoplast geformt sind.

6. Airbagtürkonstruktion nach Anspruch 5, bei welcher der Thermoplast aus Polycarbonat, Acrylnitrilbutadienstyrol, thermoplastischem Olefin, thermoplastischem Elastomer und Mischungen aus diesen besteht.

7. Airbagtürkonstruktion nach Anspruch 1, bei welcher der Haltegurt (41, 41A) und/oder die Reaktionsplatte (52, 52A) aus Metall bestehen.

8. Airbagtürkonstruktion nach Anspruch 1, bei welcher der Haltegurt (41, 41A) und/oder die Reaktionsplatte (52, 52A) aus Kunststoff bestehen.

9. Airbagtürkonstruktion nach Anspruch 1, bei welcher der Haltegurt (41, 41A) gleitend verschiebbar mit dem Entfaltungsschacht (36, 36A, 36B) verbunden ist, wodurch beim Entfalten des Airbags der Haltegurt (41, 41A) in Bezug auf den Entfaltungsschacht (36, 36A, 36B) gleiten kann.

10. Airbagtürkonstruktion nach Anspruch 1, bei welcher die erste Stange (42) massiv oder hohl sein kann.

11. Airbagtürkonstruktion nach Anspruch 1, bei welcher der Haltegurt (41, 41A) aus einem Fasernetzgewebe besteht.

12. Airbagtürkonstruktion nach Anspruch 11, bei welcher das Netzgewebe aus Metall oder Kunststoff oder Naturfasern besteht.

13. Airbagtürkonstruktion nach Anspruch 1, bei welcher der Haltegurt (41, 41A) aus Kabel oder Draht besteht.

14. Airbagtürkonstruktion nach Anspruch 1, bei welcher der Haltegurt (41, 41A) aus unidirektionalen Fasern besteht.

15. Airbagtürkonstruktion nach Anspruch 1, bei welcher der Haltegurt (41, 41A) aus einem geformten Draht oder Kabel besteht.

16. Airbagtürkonstruktion nach Anspruch 1, bei welcher die Reaktionsplatte (52, 52A) und/oder der Entfaltungsschacht (36, 36A, 36B) durch Vibrationsschweißen an dem Armaturenbrett (10, 10A, 10B) befestigt sind.

17. Airbagtürkonstruktion nach Anspruch 1, bei welcher das zweite Ende des Haltegurts (41, 41A) an einer zweiten Stange (42A) befestigt ist, wobei die zweite Stange (42A) mit dem Entfaltungsschacht (36, 36A, 36B) verbindbar ist.

## Revendications

1. Agencement de porte de coussin gonflable destiné à un véhicule à moteur comportant :
un tableau de bord (10, 10A, 10B) présentant une ouverture destinée au coussin gonflable (22, 22A),
une porte de coussin gonflable (14, 14A, 14B, 14C) formée dans ladite ouverture avec des zones de pré-fragilisation (16A, 16B, 32) dans le tableau de bord (10, 10A, 10B),
une glissière de déploiement (36, 36A, 36B) installée dans ladite ouverture,
une plaque de réaction (52, 52A), de sorte que la plaque de réaction (52, 52A) et la glissière de déploiement (36, 36A, 36B) sont fixées au dessous de ladite porte de coussin gonflable (14, 14A, 14B, 14C) et au dit tableau de bord (10, 10A, 10B),
une attache (41, 41A) présentant une première extrémité et une seconde extrémité, dans laquelle la première extrémité de ladite attache est fixée à ladite plaque de réaction (52, 52A), et ladite seconde extrémité de ladite attache est fixée à ladite glissière de déploiement (36, 36A, 36B),
de telle sorte que lors du déploiement du coussin gonflable (22, 22A), ladite porte de coussin gonflable (14, 14A, 14B, 14C) et ladite plaque de réaction (52, 52A) peuvent, au moins partiellement, se détacher dudit tableau de bord (10, 10A, 10B) et ladite plaque de réaction (52, 52A) peut coulisser par rapport à ladite glissière de déploiement (36, 36A, 36B),
dans lequel ladite attache (41, 41A) est au moins partiellement logée dans l'une de ladite porte de coussin gonflable et de ladite glissière de déploiement (36, 36A, 36B), ladite attache (41, 41A) est engagée à coulissement avec ladite porte de coussin gonflable (14, 14A, 14B, 14C), de telle sorte que lors du déploiement du coussin gonflable, ladite attache (41, 41A) peut coulisser par rapport à ladite porte de coussin gonflable (14, 14A, 14B, 14C),
**caractérisé en ce que**
la première extrémité de ladite attache (41, 41A) est fixée à une première tige (42), dans lequel ladite première tige (42) est placée entre ladite plaque de réaction (52, 52A) et ladite porte de coussin gonflable (14, 14A, 14B, 14C), dans lequel ladite première tige (42) est engagée de façon à pouvoir coulisser avec la plaque de réaction (52, 52A).

2. Agencement de porte de coussin gonflable selon la revendication 1, dans lequel ledit tableau de bord (10, 10A, 10B) est un panneau dur en matière thermoplastique moulée par injection.

3. Agencement de porte de coussin gonflable selon la revendication 2, dans lequel ladite matière thermoplastique est composée de polycarbonate, d'acrylonitrile-butadiène-styrène, d'oléfine thermoplastique, d'un élastomère thermoplastique et de leurs mélanges.

4. Agencement de porte de coussin gonflable selon la revendication 1, dans lequel ledit tableau de bord (10, 10A, 10B) est recouvert d'une peau souple et de mousse.

5. Agencement de porte de coussin gonflable selon la revendication 1, dans lequel ladite porte de coussin gonflable (14, 14A, 14B, 14C) et ladite glissière de déploiement (36, 36A, 36B) sont moulées à partir de matière thermoplastique.

6. Agencement de porte de coussin gonflable selon la revendication 5, dans lequel ladite matière thermoplastique est composée de polycarbonate, d'acrylonitrile-butadiène-styrène, d'oléfine thermoplastique, d'un élastomère thermoplastique et de leurs mélanges.

7. Agencement de porte de coussin gonflable selon la revendication 1, dans lequel ladite attache (41, 41A) et/ou ladite plaque de réaction (52, 52A) sont composées de métal.

8. Agencement de porte de coussin gonflable selon la revendication 1, dans lequel ladite attache (41, 41A) et/ou ladite plaque de réaction (52, 52A) sont composées de matière plastique.

9. Agencement de porte de coussin gonflable selon la revendication 1, dans lequel ladite attache (41, 41A) est engagée à coulissement avec ladite glissière de déploiement (36, 36A, 36B) de telle sorte que lors du déploiement du coussin gonflable ladite attache (41, 41A) peut coulisser par rapport à ladite glissière de déploiement (36, 36A, 36B).

10. Agencement de porte de coussin gonflable selon la revendication 1, dans lequel ladite première tige (42) peut être pleine ou creuse.

11. Agencement de porte de coussin gonflable selon la revendication 1, dans lequel ladite attache (41, 41A) est composée de mailles tissées de fibres.

12. Agencement de porte de coussin gonflable selon la revendication 11, dans lequel lesdites mailles tissées sont composées de fibres métalliques ou plastiques ou naturelles.

13. Agencement de porte de coussin gonflable selon la revendication 1, dans lequel ladite attache (41, 41A) est faite de câble ou de fil métallique.

14. Agencement de porte de coussin gonflable selon la revendication 1, dans lequel ladite attache (41, 41A) est faite de fibres unidirectionnelles.

15. Agencement de porte de coussin gonflable selon la revendication 1, dans lequel ladite attache (41, 41A) est faite de fil métallique ou de câble travaillé.

16. Agencement de porte de coussin gonflable selon la revendication 1, dans lequel l'une, ou les deux, de ladite plaque de réaction (52, 52A) et de ladite glissière de déploiement (36, 36A, 36B) est (sont) fixée(s) au dit tableau de bord (10, 10A, 10B) par soudage par vibrations.

17. Agencement de porte de coussin gonflable selon la revendication 1, dans lequel ladite seconde extrémité de ladite attache (41, 41A) est fixée à une seconde tige (42A), dans lequel ladite seconde tige (42A) peut s'engager avec ladite glissière de déploiement (36, 36A, 36B).
